# EUROPEAN PATENT SPECIFICATION

(11) **EP 2 498 321 B1**
(45) Date of publication and mention of the grant of the patent: **30.09.2015**
(21) Application number: 12150360.1
(22) Date of filing: 06.01.2012
(51) Int. Cl.: H01M 2/20, H01M 2/26, H01M 10/42

(54) **Battery pack**
Batteriepack
Bloc-batteries

(30) Priority: 09.03.2011 US 201161451050 P; 23.09.2011 US 201113244028
(43) Date of publication of application: 12.09.2012
(73) Proprietor: Samsung SDI Co., Ltd, Gyeonggi-do (KR)
(72) Inventor: Park, Sang-Hun, Gyeonggi-do (KR); Moon, Dae-Yon, Gyeonggi-do (KR)
(74) Representative: Mounteney, Simon James

(56) References cited:
- US-A1- 2004 050 414
- US-A1- 2010 310 911

## Description

One or more embodiments of the present invention relate to a battery pack, and more particularly, to a battery pack including a plurality of unit cells that are electrically connected.

Unlike primary batteries, secondary batteries may be charged and discharged. Secondary batteries are used in not only mobile devices including mobile phones, notebook computers or the like but also used as an energy source of electric vehicles, uninterruptible power supplies or the like. According to the types of external devices to which secondary batteries are applied, secondary batteries may be used in the form of a single battery or a battery pack that is one unit formed by electrically connecting a plurality of batteries.

A small device including a mobile phone may operate for a particular time period by using an output and capacity of a single battery. However, medium or large mobile devices including notebook computers, or the like, and electric vehicles demanding a long-term operation and a high power operation, may use a pack-type battery due to issues of requiring a high output and capacity. Also, it is possible to increase an output voltage or an output current of the pack-type battery by increasing the number of batteries included therein.

One or more embodiments of the present invention include a battery pack reinforced with respect to a connection strength between a plurality of unit cells included therein, whereby an electrical connection status is stabilized. The document US2004/0050414 describes different ways of interconnecting unit cells.

According to an aspect of the invention, there is provided a battery pack as set out in claim 1. Preferred features of the invention are set out in claims 2 to 11.

According to one or more embodiments of the present invention, in a battery pack including a plurality of unit cells, an electrical connection status between the plurality of unit cells is reinforced, and a stable connection status is maintained by sufficient heat adhesion between electrode tabs that are extended from the plurality of unit cells.

These and/or other aspects will become apparent and more readily appreciated from the following description of the embodiments, taken in conjunction with the accompanying drawings of which:
FIG. 1 is an exploded perspective view of a battery pack according to an embodiment of the present invention;
FIG. 2 is an exploded perspective view illustrating a coupling status of the battery pack of FIG. 1;
FIG. 3 is a magnified exploded perspective view of a portion III of FIG. 2;
FIG. 4 is a perspective view illustrating a connection status between unit cells and a lead member in the battery pack of FIG. 1;
FIG. 5 is an exploded perspective view illustrating a connection status of FIG. 4;
FIG. 6 illustrates a side structure of FIG. 5;
FIG. 7 is a perspective view illustrating connection between unit cells and a lead member according to another embodiment of the present invention;
FIG. 8 illustrates connection between unit cells and a lead member according to another embodiment of the present invention;
FIG. 9 illustrates connection between unit cells and a lead member according to another embodiment of the present invention;
FIG. 10 illustrates connection between unit cells and a lead member according to another embodiment of the present invention;
FIG. 11 is an exploded perspective view illustrating a connection status of FIG. 10; and
FIG. 12 illustrates a side structure of FIG. 10.

Reference will now be made in detail to embodiments of the invention, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description.

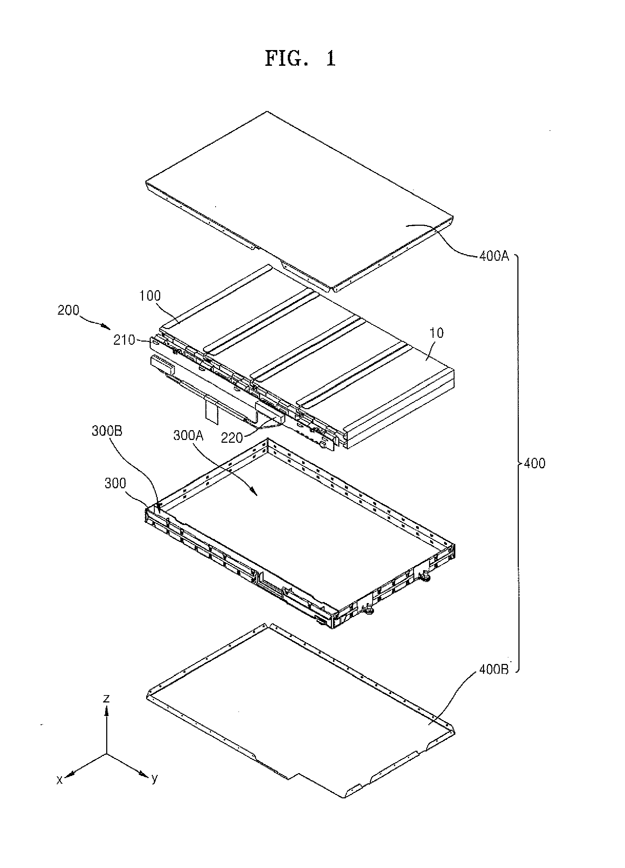

FIG. 1 is an exploded perspective view of a battery pack according to an embodiment of the present invention. Referring to FIG. 1, the battery pack includes a core pack 100, a protective circuit module 200, a frame 300, and a cover 400.

The core pack 100 may include unit cells 10 capable of being charged and discharged. For example, the core pack 100 may be a cell stack body formed by stacking two or more of the unit cells 10 and electrically connecting the unit cells 10. For example, when same polarities of adjacent unit cells 10 are connected, the adjacent unit cells 10 make a parallel connection, and when opposite polarities of adjacent unit cells 10 are connected, the adjacent unit cells 10 make a serial connection. Each of the unit cells 10 may have a rectangular shape, and the unit cells 10 may be stacked so that adjacent surfaces of the unit cells 10 may contact each other.

The protective circuit module 200 may be electrically connected to the core pack 100. The protective circuit module 200 may prevent overheat and explosion that may be incurred due to overcharge, overdischarge or overcurrent. The protective circuit module 200 may include a circuit board 210 disposed at a side of the core pack 100, and a circuit device 220 mounted on the circuit board 210. The circuit device 220 may include a passive device such as a resistor and a condenser or may include an active device such as a field-effect transistor (FET).

The frame 300 may house the core pack 100 and the protective circuit module 200. The frame 300 houses the core pack 100 and the protective circuit module 200, and has a structure to be coupled with the cover 400. The frame 300 may have a rectangular frame shape.

The cover 400 may house the core pack 100 and may be coupled with the frame 300. As illustrated in FIG. 1, the cover 400 may include a top cover 400A and a bottom cover 400B. In other embodiments, the cover 400 may not be separated into top and bottom units but may be formed as one body. The cover 400 may be formed as a thin plate shape.

Although not illustrated in FIG. 1, an insulating tape (not shown) may be disposed between the cover 400 and the core pack 100. The insulating tape may function to insulate the cover 400 including a metal from the core pack 100. Here, the insulating tape may also insulate the cover 400 from the protective circuit module 200.

Regarding assembling the battery pack, the top and bottom covers 400A and 400B are assembled with respect to the frame 300 housing the core pack 100 and the protective circuit module 200. That is, the top and bottom covers 400A and 400B are assembled to the frame 300 by having the core pack 100 and the protective circuit module 200 interposed therebetween, and in this regard, the top and bottom covers 400A and 400B, and the frame 300 are coupled by using an appropriate coupling member (not shown). For example, a plurality of coupling holes are formed in the top and bottom covers 400A and 400B, and screw members (not shown) are coupled in the coupling holes via the frame 300, so that coupling may be achieved.

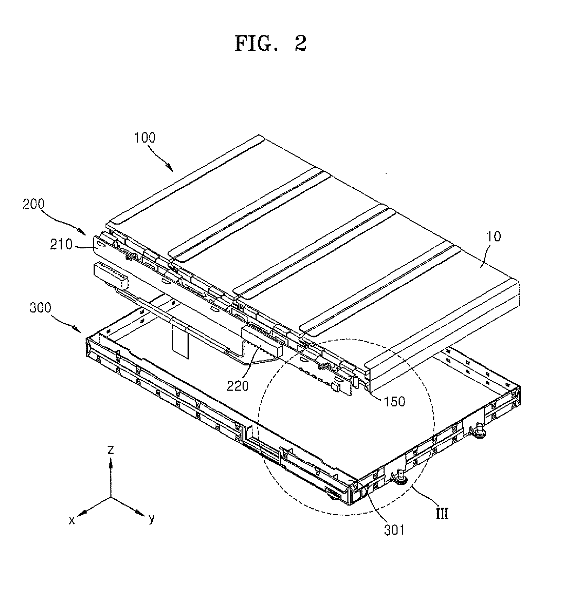

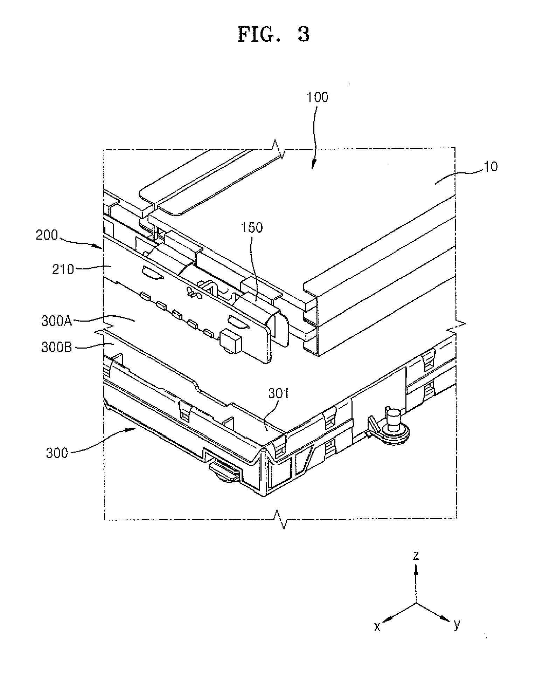

FIG. 2 is an exploded perspective view illustrating a coupling status of the core pack 100, the protective circuit module 200, and the frame 300 of FIG. 1. FIG. 3 is a magnified exploded perspective view of a portion III of FIG. 2.

The core pack 100 and the protective circuit module 200 may be electrically connected by using lead members 150. Ends of the lead members 150 may be connected to the core pack 100 and the other ends of the lead members 150 may be connected to the protective circuit module 200. For example, the ends of the lead members 150 may be connected to electrode tabs (not shown) extending from the unit cells 10 configuring the core pack 100. The other ends of the lead members 150 may be connected to the circuit board 210 configuring the protective circuit module 200. The frame 300 may have a partition wall 301 for dividing a first space 300A for housing the core pack 100, and a second space 300B for housing the protective circuit module 200.

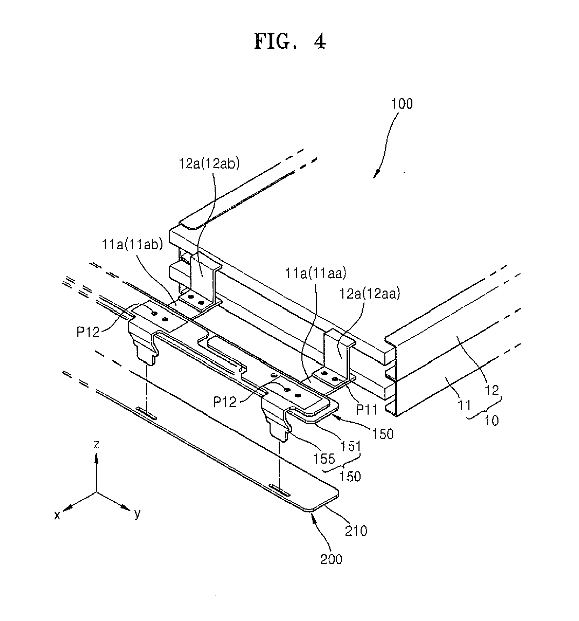

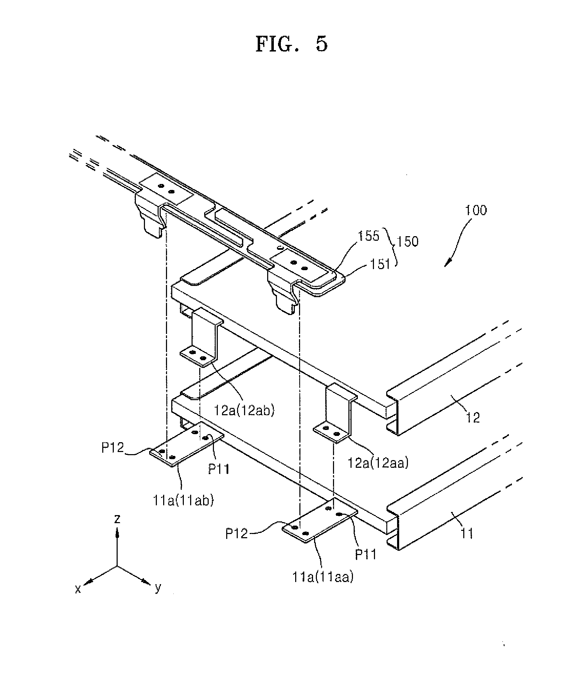

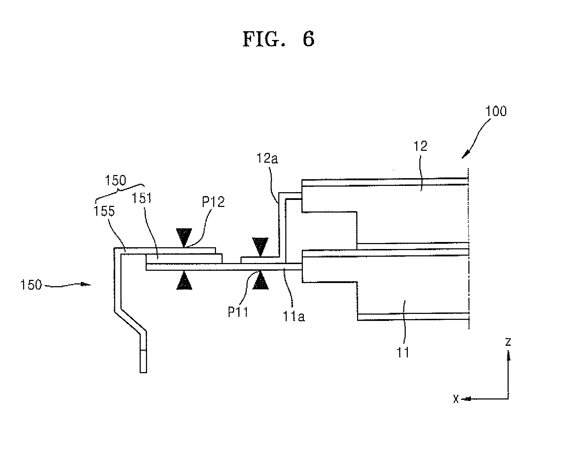

FIG. 4 is a perspective view illustrating a connection status between the core pack 100 and the lead member 150. FIG. 5 is an exploded perspective view illustrating a connection status of FIG. 4. FIG. 6 illustrates a side structure of FIG. 5.

Referring to FIGS. 4 through 6, the core pack 100 includes the unit cells 10 that are vertically stacked. In first and second unit cells 11 and 12 that are vertically stacked, a first electrode tab 11a of the first unit cell 11, and a second electrode tab 12a of the second unit cell 12 may form a mutual contact at a first coupling region P11. For example, as illustrated in FIG. 6, the first electrode tab 11a of the first unit cell 11 may extend in an extension direction (an X-direction), and the second electrode tab 12a of the second unit cell 12 is perpendicularly bent with respect to the extension direction (the X-direction) while extending in a vertical direction (a Z-direction) toward the first electrode tab 11a, and is bent again at an area contacting the first electrode tab 11a and then is coupled while overlapping the first electrode tab 11a. Here, in the first coupling region P11 where the first electrode tab 11a and the second electrode tab 12a are overlapped, the first electrode tab 11a and the second electrode tab 12a may be welded and coupled with each other. For example, the first electrode tab 11a and the second electrode tab 12a may be coupled with each other by performing resistance welding.

The first coupling region P11 may include a contact point between the first electrode tab 11a and the second electrode tab 12a. The first coupling region P11 may increase a connection strength of the first and second electrode tabs 11a and 12a and may maintain a firm connection status by connecting the first electrode tab 11a and the second electrode tab 12a. For example, coupled members (corresponding to the first and second electrode tabs 11a and 12a) that are to be coupled in one contact point are limited to only the first and second electrode tabs 11a and 12a, so that a sufficient connection strength may be obtained by performing a welding process once. As will be described later, according to the present embodiment, the first and second electrode tabs 11a and 12a are connected in the first coupling region P11, and the first electrode tab 11a and the lead member 150 are connected in a second coupling region P12 formed in another place.

By doing so, a connection strength is increased in a manner that the first and second electrode tabs 11a and 12a, and the lead member 150 are not connected in one contact point but connected in contact points that are the first and second coupling regions P11 and P12 at different places. When a plurality of coupled members (corresponding to the first and second electrode tabs 11a and 12a, and the lead member 150) are coupled in one contact point, that is, when the coupled members are connected by performing a welding process once, heat adhesion therebetween is not sufficient, such that a connection strength is weak, and a connection status may be unstable.

In order to simplify a manufacturing process of the core pack 100, the first unit cell 11 and the second unit cell 12 may have a standardized size in some embodiments, and the first electrode tab 11a and the second electrode tab 12a may have the same longitudinal length. The first electrode tab 11a extends in the extension direction (the X-direction) whereas the second electrode tab 12a includes a portion extending in the vertical direction (the Z-direction), so that, compared to the second electrode tab 12a, the first electrode tab 11a further extends from the first coupling region P11, and an end of the second electrode tab 12a is positioned on the first electrode tab 11a.

For coupling with the lead member 150, the second coupling region P12 is formed on the first electrode tab 11a solely extending from the end of the second electrode tab 12a. The second coupling region P12 includes a contact point between the lead member 150 and the first electrode tab 11a. The lead member 150 electrically connects the first electrode tab 11a and the protective circuit module 200, and for example, the lead member 150 may include a flexible circuit board such as a flexible printed circuit board (FPCB) and the like.

The second coupling region P12 may be formed along the extension direction (the X-direction) of the coupled first and second electrode tabs 11a and 12a in a place different from the first coupling region P11 and may be formed in a place separate from the first coupling region P11, that is, the second coupling region P12 may be formed on a region in which the first electrode tab 11a solely extends. In this manner, the first and second electrode tabs 11a and 12a, and the lead member 150 are not connected by using one integrated contact point but are connected in separate contact points that are the first coupling region P11 between the first electrode tab 11a and the second electrode tab 12a, and the second coupling region P12 between the first electrode tab 11a and the lead member 150, so that it is possible to limit the number of coupled members (corresponding to the first and second electrode tabs 11a and 12a, and the lead member 150) per one welding process, whereby a coupling strength may be achieved via sufficient heat adhesion.

In order to form the first coupling region P11, a welding electrode (not shown) may be disposed by having the coupled first and second electrode tabs 11a and 12a disposed therebetween, the welding electrode may contact the coupled first and second electrode tabs 11a and 12a, and then the resistance welding may be performed by applying a welding current thereto.

In order to form the second coupling region P12, a welding electrode (not shown) may be disposed by having the first electrode tab 11a and the lead member 150 disposed therebetween, the welding electrode may contact coupled materials (the first electrode tab 11a and the lead member 150), and then the resistance welding may be performed by applying a welding current thereto.

The first and second coupling regions P11 and P12 may be formed at different times. For example, while a welding electrode (not shown) moves along the extension direction (the X-direction) of the coupled first and second electrode tabs 11a and 12a, welding processes may be performed at temporally different times, so that the first coupling region P11 and the second coupling region P12 may be formed.

In another embodiment, the first and second coupling regions P11 and P12 may be simultaneously formed. For example, a plurality of welding electrodes (not shown) that are arrayed on a first position and a second position may be driven by performing a welding process once, so that the first and second coupling regions P11 and P12 may be simultaneously formed.

As illustrated in FIG. 5, the first and second unit cells 11 and 12 may have electrode tabs 11aa, 11ab, 12aa, and 12ab having different polarities so as to externally output accumulated power. For example, each of the first and second unit cells 11 and 12 may have one of positive electrode tabs 11aa and 12aa and one of negative electrode tabs 11ab and 12ab, respectively. The first electrode tab 11a of the first unit cell 11 includes all of the positive electrode tab 11aa and the negative electrode tab 11ab, and the first electrode tab 11a may indicate the positive electrode tab 11aa or the negative electrode tab 11ab. Similarly, the second electrode tab 12a of the second unit cell 12 includes all of the positive electrode tab 12aa and the negative electrode tab 12ab, and the second electrode tab 12a may indicate the positive electrode tab 12aa or the negative electrode tab 12ab.

For example, the positive electrode tab 11aa of the first unit cell 11, and the positive electrode tab 12aa of the second unit cell 12a may be connected with each other via the first coupling region P11 while the positive electrode tab 11aa of the first unit cell 11 may be electrically connected with the lead member 150 via the second coupling region P12 that is different from the first coupling region P11. The negative electrode tab 11ab of the first unit cell 11, and the negative electrode tab 12ab of the second unit cell 12 may be connected with each other via another first coupling region P11 while the negative electrode tab 11ab of the first unit cell 11 may be electrically connected with the lead member 150 via another second coupling region P12 that is different from the other first coupling region P11.

In another embodiment, connection between the first electrode tab 11a of the first unit cell 11 and the second electrode tab 12a of the second unit cell 12 may be only applied to an electrode tab selected from among the positive electrode tab 11aa and the negative electrode tab 11ab of the first unit cell 11, and an electrode tab selected from among the positive electrode tab 12aa and the negative electrode tab 12ab of the second unit cell 12.

For example, the positive electrode tab 11aa of the first electrode tab 11a of the first unit cell 11, and the negative electrode tab 12ab of the second electrode tab 12a of the second unit cell 12 may be connected to the protective circuit module 200 via the first coupling region P11 and the second coupling region P12. When opposite polarities are connected, the first coupling region P11 and the second coupling region P12 may be alternately disposed to allow the electrode tabs 11aa, 11ab, 12aa, and 12ab having different polarities to be adjacent to each other.

The lead member 150 that electrically connects the first electrode tab 11a and the protective circuit module 200 may be formed as an FPCB, and may relay power transmission between the first electrode tab 11a and the protective circuit module 200. For example, the lead member 150 includes a base film 151 and a wiring unit 155 formed on the base film 151. The wiring unit 155 may include a circuit pattern (not shown) extending on the base film 151 toward the protective circuit module 200, and a cover lay (not shown) covering the circuit pattern.

For example, coupling between the first electrode tab 11a and the lead member 150 may be achieved in a manner below mentioned. That is, the first electrode tab 11a may extend below a bottom surface of the lead member 150 and may be overlapped with the base film 151. Also, the first electrode tab 11a and the lead member 150 that are overlapped with each other are held between welding electrodes (not shown), and a welding current is applied thereto, so that the resistance welding may be performed on the first electrode tab 11a and the lead member 150.

Although not illustrated in the drawings, the first electrode tab 11a may extend above the lead member 150 and may be arranged on the wiring unit 155 of the lead member 150. Afterward, the first electrode tab 11a and the lead member 150 that are overlapped with each other are held between welding electrodes (not shown), and then the resistance welding may be performed thereon. In other words, in some embodiments of the invention, the lead member may comprise a wiring unit and a base film, wherein the base film is arranged between the first electrode tab and the wiring unit at the second coupling region.

Therefore, as explained above FIGs. 1-6 show a battery pack that includes a core pack 100, a protective circuit module 200, and a lead member 150. The core pack 100 includes a plurality of unit cells, including a first cell 11 and a second cell 12. The lead member 150 electrically connects electrode tabs of the first and second cells to the protective circuit module 200. As shown in FIG. 6, an electrode tab 11a of the first cell 11 is fixed to an electrode tab 12a of the second cell 12 at a first coupling region P11, and the lead member 150 is fixed to a portion of the electrode tab 11a of the first cell 11 at a second coupling region P12. By doing this, connection strength is increased in a manner that the first and second electrode tabs 11a and 12a, and the lead member 150 are not connected in one contact point but connected in contact points that are the first and second coupling regions P11 and P12 at different places.

In other words, such embodiments provide a battery pack comprising: a first battery cell comprising a first electrode tab; a second battery cell comprising a second electrode tab; a lead member electrically connected to the first electrode tab and the second electrode tab; wherein the first electrode tab and the second electrode tab are coupled together at a first coupling region, and the lead member is coupled to the first electrode tab at a second coupling region, the second coupling region being different to the first coupling region. The lead member may be electrically connected to the second electrode tab via the first electrode tab. Such embodiments may include a protective circuit module for controlling charge and discharge of the first battery cell and the second battery cell, wherein the lead member is for electrically connecting the first battery cell and the second battery cell to the protective circuit module.

The second battery cell may be stacked on the first battery cell, and the first electrode tab and the second electrode tab may project in a first direction. In some embodiments, the first electrode tab has a connection portion that extends in the first direction, wherein a region of the connection portion overlaps with the lead member to form the second coupling region; and the second electrode tab has a first portion extending towards the first electrode tab, and a second portion that overlaps with a region of the connection portion of the first electrode tab to form the first coupling region. The second electrode tab has, in some embodiments, a third portion arranged between the first portion of the second electrode tab and the second battery cell, wherein the third portion extends in the first direction.

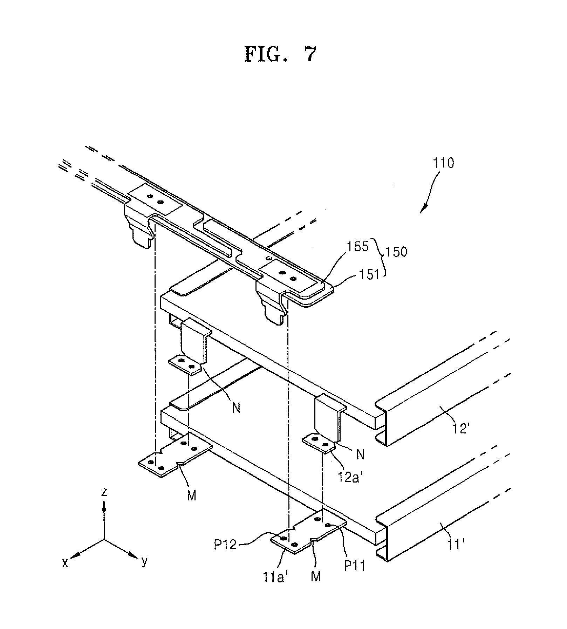

FIG. 7 is an exploded perspective view illustrating connection between a core pack 110 and a lead member 150 according to another embodiment of the present invention. The core pack 110 may include first and second unit cells 11' and 12', and the first and second unit cells 11' and 12' may include first and second electrode tabs 11a' and 12a', respectively.

The second electrode tab 12a' may have a notch part N for convenience of a bending work. The notch part N defines a bend position of the second electrode tab12a' and allows the second electrode tab 12a' to be consistently bent at the defined bend position. The notch part N may have a wedge-shape formed at side ends of a widthwise direction crossing a length of the second electrode tab 12a', and the second electrode tab 12a' may be easily bent in the notch part N according to a decrease in a line width.

Here, in order to simplify a manufacturing process of the core pack 110, the first unit cell 11' and the second unit cell 12' may have the substantially same structure, and in this case, notch parts M and N may be formed in the first unit cell 11' and the second unit cell 12'.

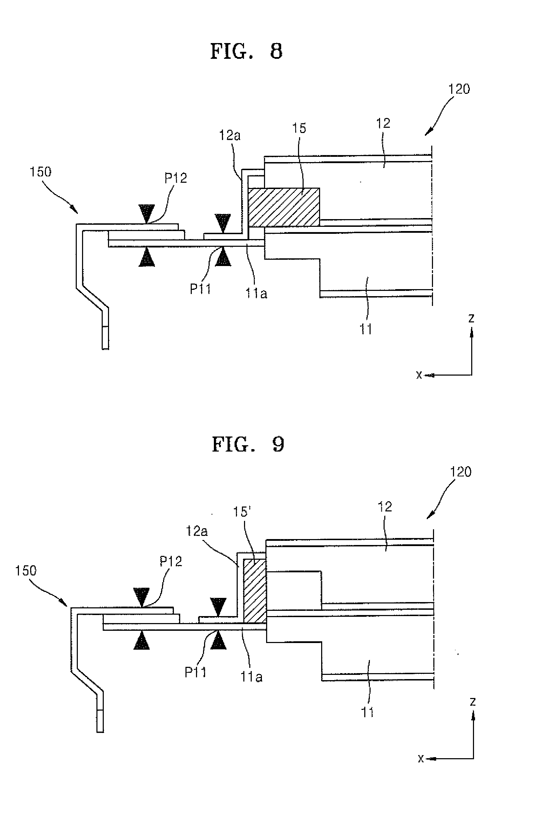

FIG. 8 illustrates connection between a core pack 120 and a lead member 150 according to another embodiment of the present invention. Referring to FIG. 8, a first unit cell 11 and a second unit cell 12 are stacked in a vertical direction (a Z-direction), and a first electrode tab 11a of the first unit cell 11 and a second electrode tab 12a of the second unit cell 12 are coupled with each other in a first coupling region P11 so that they are electrically connected. The first electrode tab 11a of the first unit cell 11, and the lead member 150 are coupled with each other in a second coupling region P12 that is separate from the first coupling region P11.

The second electrode tab 12a extends in the vertical direction (the Z-direction) from a main body of the second unit cell 12, and is overlapped on the first electrode tab 11a. A supporting member 15 may be interposed between the second electrode tab 12a and the main body of the second unit cell 12 so as to support the second electrode tab 12a. Here, the second electrode tab 12a extends in the vertical direction (the Z-direction) while being supported by the supporting member 15, so that the second electrode tab 12a may have a structural stability without unstably suspending in a space, and workability and a handling property in an assembling process including a welding operation for electrical connection may be improved.

FIG. 9 illustrates connection between a core pack 120 and a lead member 150 according to another embodiment of the present invention. Referring to FIG. 9, a first unit cell 11 and a second unit cell 12 are stacked in a vertical direction (a Z-direction), and a first electrode tab 11a of the first unit cell 11 and a second electrode tab 12a of the second unit cell 12 are coupled with each other in a first coupling region P11 so that the first unit cell 11 and the second unit cell 12 are electrically connected.

The first electrode tab 11a extends in an extension direction (an X-direction) of the first electrode tab 11a, and the second electrode tab 12a is perpendicularly bent with respect to the extension direction (the X-direction) while extending toward the first electrode tab 11a, is bent again and then is overlapped on the first electrode tab 11a.

The second electrode tab 12a may have a step shape according to a bending process and a supporting member 15' may be arranged in a lower portion of the second electrode tab 12a so as to stably support the step shape. For example, the supporting member 15' is interposed between the second electrode tab 12a and the first electrode tab 11a, and functions to reinforce structural rigidity of the second electrode tab 12a by supporting a height step of the second electrode tab 12a. However, a form or a position of the supporting member 15' is not limited thereto if only the supporting member 15' supports a bent shape or the step shape of the second electrode tab 12a. For example, the supporting member 15' may be formed as a form tape but is not limited thereto and thus may be formed by using one of various materials and having one of various shapes.

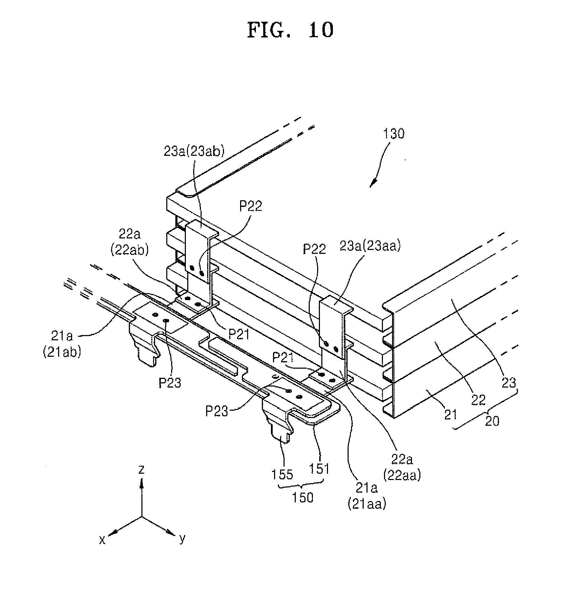

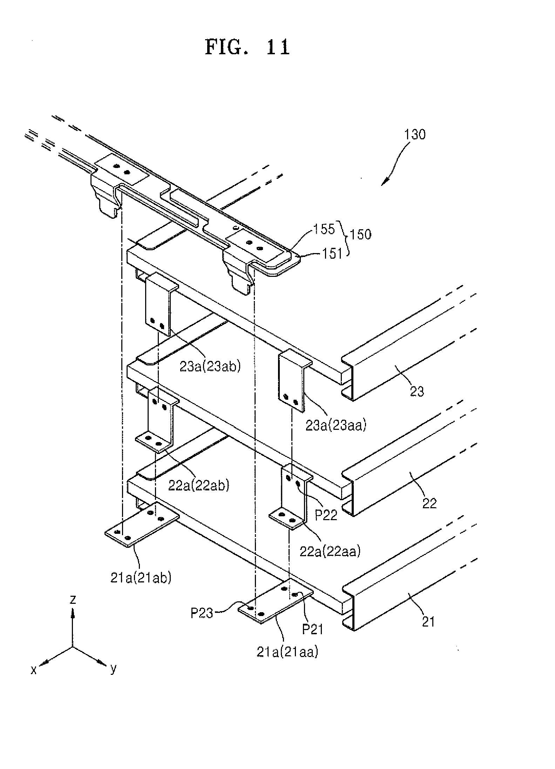

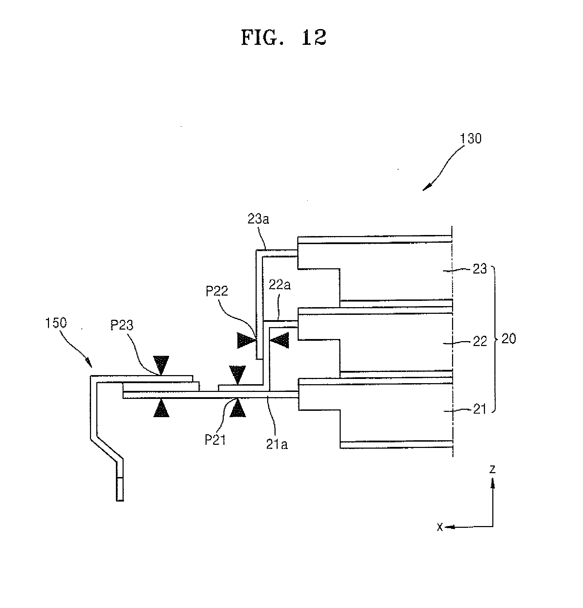

FIG. 10 illustrates connection between a core pack 130 and a lead member 150 according to another embodiment of the present invention. FIG. 11 is an exploded perspective view of a connection structure of FIG. 10. FIG. 12 illustrates a side structure of FIG. 10.

Referring to FIGS. 10 through 12, the core pack 130 includes a plurality of unit cells 20, for example, the core pack 130 may include three unit cells 21, 22, and 23 that are adjacent to each other, and the three unit cells 21, 22, and 23 may be stacked in a vertical direction (a Z-direction).

The adjacent first through third unit cells 21, 22, and 23 are sequentially connected in the unit of a pair via first and second coupling regions P21 and P22 that are different from each other. In more detail, first and second electrode tabs 21a and 22a that extend from the first and second unit cells 21 and 22 are connected to each other in the first coupling region P21, and the second electrode tab 22a and a third electrode tab 23a that extend from the second and third unit cells 22 and 23 are connected to each other in the second coupling region P22. The first and second coupling regions P21 and P22 are formed in different places. By limiting the number of the electrode tabs 21a, 22a, and 23a connected via each of the first and second coupling regions P21 and P22, for example, by limiting the number of the electrode tabs 21a, 22a, and 23a as two coupled members per each of the first and second coupling regions P21 and P22, the electrode tabs 21a, 22a, and 23a that are overlapped with each other via sufficient heat adhesion may be connected while having a sufficient coupling strength. For example, if the electrode tabs 21a, 22a, and 23a are electrically connected with each other via the same coupling region, heat adhesion may not be sufficient in a thickness direction of the first through third electrode tables 21a, 22a, and 23a that are overlapped with each other, such that a coupling strength may become weak, and an unstable connection may be made.

This will now be described in detail with reference to FIG. 12. That is, the first electrode tab 21a extends in an extension direction (an X-direction) of the first electrode tab 21a, and the second electrode tab 22a is perpendicularly bent with respect to the extension direction (the X-direction) while extending in a vertical direction (a Z-direction) toward the first electrode tab 21a, is bent again and then is overlapped on the first electrode tab 21a. The third electrode tab 23a is coupled and extends together with the second electrode tab 22a that is perpendicularly bent with respect to the extension direction (the X-direction) while extending in the vertical direction (the Z-direction).

In order to simplify a manufacturing process of the core pack 130, the first through third unit cells 21, 22, and 23 may have a standardized same specification, so that the first through third electrode tabs 21a, 22a, and 23a may have the same longitudinal length. The first electrode tab 21a extends in the extension direction (the X-direction) whereas the second electrode tab 22a extends from an offset position in the vertical direction (the Z-direction), so that the first electrode tab 21a further extends than the second electrode tab 22a in an extension direction (the X-direction) of the coupled first and second electrode tabs 21a and 22a. Also, the third electrode tab 23a further extends from an offset position in the vertical direction (the Z-direction) than the second electrode tab 22a, so that the second electrode tab 22a further extends than the third electrode tab 23a in an extension direction (the Z-direction) of the coupled second and third electrode tabs 22a and 23a.

The first coupling region P21 between the first and second electrode tables 21a and 22a may be formed in a predetermined place on the first electrode tab 21a, and may be formed in a place overlapped with the second electrode tab 22a on the first electrode tab 21a. The second coupling region P22 between the second and third electrode tabs 22a and 23a may be formed in a predetermined position on the second electrode tab 22a extending in the vertical direction (the Z-direction). The first and second coupling regions P21 and P22 are formed at separate places, and the second electrode tab 22a forms a contact point with the first electrode tab 21a in the first coupling region P21 and simultaneously, the second electrode tab 22a forms another contact point with the third electrode tab 23a in the second coupling region P22.

The first electrode tab 21a is electrically connected with the lead member 150 via a third coupling region P23. That is, the first electrode tab 21a extends in the extension direction (the X-direction), so that the first electrode tab 21a may further extend than the second and third electrode tabs 22a and 23a extending from an offset position in the vertical direction (the Z-direction), and the first electrode tab 21a may be connected with the lead member 150 via the third coupling region P23 on the first electrode tab 21a solely extending in the extension direction (the X-direction). As illustrated in FIG. 12, the lead member 150 is overlapped on the first electrode tab 21a, and the third coupling region P23 may be formed by performing welding. Alternatively, the lead member 150 may be overlapped below the first electrode tab 21a, and the third coupling region P23 may be formed by performing welding.

Referring to FIG. 11, connection between the first through third electrode tabs 21a, 22a, and 23a may be applied to electrode tabs selected from among electrode tabs 21aa, 21ab, 22aa, 22ab, 23aa and 23ab of the first through third unit cells 21, 22, and 23 or may be applied to all of the electrode tabs 21aa, 21 ab, 22aa, 22ab, 23aa and 23ab.

For example, the first through third unit cells 21, 22, and 23 may include the positive electrode tabs 21aa, 22aa, 23aa and the negative electrode tabs 21ab, 22ab, 23ab which have opposite polarities, and the positive electrode tab 21 aa of the first unit cell 21, the positive electrode tab 22aa of the second unit cell 22, and the positive electrode tab 23aa of the third unit cell 23 may sequentially form a pair, may be integrally coupled via the first and second coupling regions P21 and P22, and may be electrically connected with the lead member 150 via the third coupling region P23. Similarly, the negative electrode tab 21ab of the first unit cell 21, the negative electrode tab 22ab of the second unit cell 22, and the negative electrode tab 23ab of the third unit cell 23 may sequentially form a pair, may be coupled to each other via another first coupling region P21 and another second coupling region P22, and may be electrically connected with the lead member 150 via another third coupling region P23.

In another embodiment, the opposite polarities of the first through third unit cells 21, 22, and 23 may be connected with each other. For example, the positive electrode tab 21aa of the first unit cell 21 and the negative electrode tab 22ab of the second unit cell 22 may be electrically connected with each other via the first coupling region P21, and the positive electrode tab 22aa of the second unit cell 22 and the negative electrode tab 23ab of the third unit cell 23 may be electrically connected with each other via the second coupling region P22. By connecting the opposite polarities of the first through third unit cells 21, 22, and 23 that are adjacent to each other, the first through third unit cells 21, 22, and 23 may be connected in series. Finally, electrode tabs that are connected to an external source, for example, the negative electrode tab 21 ab of the first unit cell 21 and the positive electrode tab 23aa of the third unit cell 23 may be electrically connected with the lead member 150 via different third coupling regions P23.

Therefore, FIGs. 10-12 show embodiments in which there are three unit cells in a vertical stack. As shown in FIG. 12, a first cell 21 has an electrode tab 21a that is fixed to the lead member 150 at a coupling region P23. The electrode tab 22a of the second cell 22 is coupled to the electrode tab 21a of the first cell 21 at a coupling region P21, and the electrode tab 23a of the third cell 23 is coupled to the electrode tab 22a of the second cell 22 at a coupling region P22. Therefore, FIG. 12 shows that separate coupling regions P21, P22 and P23 are formed, so as to increase connection strength.

Therefore, in such embodiments there is provided a battery pack comprising: a first battery cell comprising a first electrode tab, a second battery cell comprising a second electrode tab, and a third battery cell comprising a third electrode tab. In such embodiments, the first electrode tab and the second electrode tab are coupled together at a coupling region, and the second electrode tab and the third electrode tab are coupled together at a different coupling region. As shown in FIG. 12, a lead member can be electrically connected to the first electrode tab and the second electrode tab at a further different coupling region.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack comprising:
a first battery cell comprising a first electrode tab (11a);
a second battery cell comprising a second electrode tab (12a);
a lead member (150) electrically connected to the first electrode tab and the second electrode tab;
a protective circuit module (200) for controlling charge and discharge of the first battery cell and the second battery cell;
wherein the first electrode tab and the second electrode tab are coupled together at a first coupling region (P11), and the lead member is coupled to the first electrode tab at a second coupling region (P12), the second coupling region being different to the first coupling region and the lead member is for electrically connecting the first battery cell and the second battery cell to the protective circuit module,
the second battery cell is stacked on the first battery cell, and the first electrode tab and the second electrode tab project in a first direction;
the first electrode tab has a connection portion that extends in the first direction, wherein a region of the connection portion overlaps with the lead member to form the second coupling region; and
the second electrode tab has a first portion extending towards the first electrode tab, a second portion that overlaps with a region of the connection portion of the first electrode tab to form the first coupling region, and a third portion arranged between the first portion of the second electrode tab and the second battery cell, wherein the third portion extends in the first direction.

2. A battery pack according to claim 1, wherein the lead member (150) is electrically connected to the second electrode tab (12a) via the first electrode tab (11a).

3. A battery pack according to any one of claims 1 to 2, wherein the first electrode tab (11a) and the second electrode tab (12a) are welded at the first coupling region (P11), and/or the lead member (150) and the first electrode tab (11a) are welded at the second coupling region (P12).

4. A battery pack according to any of claims 1 to 3, further comprising a support member (15) arranged between the first portion of the second electrode tab (12a) and the second battery cell, optionally wherein the support member occupies a space between the first battery cell and the second battery cell.

5. A battery pack according to claim 4, wherein the support member (15) occupies a space between the third portion of the second electrode tab (12a) and the connecting portion of the first electrode tab (11 a).

6. A battery pack according to any one of claims 1 to 5, wherein the second electrode tab (12a) comprises a notch portion located at a bending region between the first portion of the second electrode tab and the second portion of the second electrode tab.

7. A battery pack according to any one of claims 1 to 6, wherein the lead member (150) comprises a wiring unit (155) and a base film (151), wherein the base film is arranged between the first electrode tab (11a) and the wiring unit at the second coupling region (P12).

8. A battery pack according to any one of claims 1 to 7, further comprising:
a third battery cell comprising a third electrode tab (23a);
wherein the third electrode tab is coupled to one of the first or second electrode tabs (21 a) at a third coupling region (P23), the third coupling region being different to the first (P21) and second coupling regions (P22).

9. A battery pack according to claim 8, wherein the third battery cell is stacked on the second battery cell, and the third electrode tab (23a) is arranged to project in the first direction.

10. A battery pack according to claim 9, wherein the third electrode tab (23a) has a first portion extending in the first direction, and a second portion that overlaps with a region of the first portion of the second electrode tab (22a) to form the third coupling region (P23).

11. A battery pack according to any one of claims 8 to 10, wherein the third electrode tab (23a) is welded to the second electrode tab (22a) at the third coupling region (P23).

## Patentansprüche

1. Batteriepack, das Folgendes umfasst:
eine erste Batteriezelle, die eine erste Elektrodenlasche (11a) umfasst,
eine zweite Batteriezelle, die eine zweite Elektrodenlasche (12a) umfasst,
ein Leitungselement (150), das elektrisch mit der ersten Elektrodenlasche und der zweiten Elektrodenlasche verbunden ist,
ein Schutzschaltungsmodul (200) zum Regeln des Ladens und Entladens der ersten Batteriezelle und der zweiten Batteriezelle,
wobei die erste Elektrodenlasche und die zweite Elektrodenlasche an einem ersten Kopplungsbereich (P11) aneinander gekoppelt sind und das Leitungselement an einem zweiten Kopplungsbereich (P12) an die erste Elektrodenlasche gekoppelt ist, wobei sich der zweite Kopplungsbereich von dem ersten Kopplungsbereich unterscheidet und das Leitungselement dazu dient, die erste Batteriezelle und die zweite Batteriezelle mit dem Schutzschaltungsmodul zu verbinden,
die zweite Batteriezelle auf die erste Batteriezelle gestapelt ist und die erste Elektrodenlasche und die zweite Elektrodenlasche in einer ersten Richtung vorspringen,
die erste Elektrodenlasche einen Verbindungsabschnitt hat, der sich in der ersten Richtung erstreckt, wobei ein Bereich des Verbindungsabschnitts mit dem Leitungselement überlappt, um den zweiten Kopplungsbereich zu bilden, und
die zweite Elektrodenlasche einen ersten Abschnitt, der sich zu der ersten Elektrodenlasche hin erstreckt, einen zweiten Abschnitt, der mit einem Bereich des Verbindungsabschnitts der ersten Elektrodenlasche überlappt, um den ersten Kopplungsbereich zu bilden, und einen dritten Abschnitt, der zwischen dem ersten Abschnitt der zweiten Elektrodenlasche und der zweiten Batteriezelle angeordnet ist, hat, wobei sich der dritte Abschnitt in der ersten Richtung erstreckt.

2. Batteriepack nach Anspruch 1, wobei das Leitungselement (150) über die erste Elektrodenlasche (11a) elektrisch mit der zweiten Elektrodenlasche (12a) verbunden ist.

3. Batteriepack nach einem der Ansprüche 1 bis 2, wobei die erste Elektrodenlasche (11a) und die zweite Elektrodenlasche (12a) an dem ersten Kopplungsbereich (P11) verschweißt sind und/oder das Leitungselement (150) und die erste Elektrodenlasche (11a) an dem zweiten Kopplungsbereich (P12) verschweißt sind.

4. Batteriepack nach einem der Ansprüche 1 bis 3, das ferner ein Stützelement (15) umfasst, das zwischen dem ersten Abschnitt der zweiten Elektrodenlasche (12a) und der zweiten Batteriezelle angeordnet ist, wobei wahlweise das Stützelement einen Raum zwischen der ersten Batteriezelle und der zweiten Batteriezelle einnimmt.

5. Batteriepack nach Anspruch 4, wobei das Stützelement (15) einen Raum zwischen dem dritten Abschnitt der zweiten Elektrodenlasche (12a) und dem Verbindungsabschnitt der ersten Elektrodenlasche (11a) einnimmt.

6. Batteriepack nach einem der Ansprüche 1 bis 5, wobei die zweite Elektrodenlasche (12a) einen Kerbenabschnitt umfasst, der an einem Biegungsbereich zwischen dem ersten Abschnitt der zweiten Elektrodenlasche und dem zweiten Abschnitt der zweiten Elektrodenlasche angeordnet ist.

7. Batteriepack nach einem der Ansprüche 1 bis 6, wobei das Leitungselement (150) eine Verdrahtungseinheit (155) und eine Basisfolie (151) umfasst, wobei die Basisfolie zwischen der ersten Elektrodenlasche (11a) und der Verdrahtungseinheit an dem zweiten Kopplungsbereich (P12) angeordnet ist.

8. Batteriepack nach einem der Ansprüche 1 bis 7, das ferner Folgendes umfasst:
eine dritte Batteriezelle, die eine dritte Elektrodenlasche (23a) umfasst,
wobei die dritte Elektrodenlasche an einem dritten Kopplungsbereich (P23) an eine von der ersten oder der zweiten Elektrodenlasche (21a) gekoppelt ist, wobei sich der dritte Kopplungsbereich von dem ersten (P21) und dem zweiten Kopplungsbereich (P22) unterscheidet.

9. Batteriepack nach Anspruch 8, wobei die dritte Batteriezelle auf die zweite Batteriezelle gestapelt ist und die dritte Elektrodenlasche (23a) dafür angeordnet ist, in der ersten Richtung vorzuspringen.

10. Batteriepack nach Anspruch 9, wobei die dritte Elektrodenlasche (23a) einen ersten Abschnitt, der sich in der ersten Richtung erstreckt, und einen zweiten Abschnitt, der mit einem Bereich des ersten Abschnitts der zweiten Elektrodenlasche (22a) überlappt, um den dritten Kopplungsbereich (P23) zu bilden.

11. Batteriepack nach einem der Ansprüche 8 bis 10, wobei die dritte Elektrodenlasche (23a) an dem dritten Kopplungsbereich (P23) an die zweite Elektrodenlasche (22a) geschweißt ist.

## Revendications

1. Bloc-batterie, comprenant :
une première cellule de batterie, comprenant une première languette d'électrode (11a) ;
une deuxième cellule de batterie, comprenant une deuxième languette d'électrode (12a) ;
un élément conducteur (150), connecté électriquement à la première languette d'électrode et à la deuxième languette d'électrode ;
un module de circuit de protection (200), pour contrôler la charge et la décharge de la première cellule de batterie et de la deuxième cellule de batterie ;
dans lequel la première languette d'électrode et la deuxième languette d'électrode sont accouplées l'une à l'autre au niveau d'une première région d'accouplement (P11), l'élément conducteur étant accouplé à la première languette d'électrode au niveau d'une deuxième région d'accouplement (P12), la deuxième région d'accouplement étant différente de la première région d'accouplement et l'élément conducteur servant à connecter électriquement la première cellule de batterie et la deuxième cellule de batterie au module de circuit de protection ;
la deuxième cellule de batterie étant empilée sur la première cellule de batterie, et la première languette d'électrode ainsi que la deuxième cellule d'électrode débordant dans une première direction ;
la première languette d'électrode comportant une partie de connexion s'étendant dans la première direction, une région de la partie de connexion chevauchant l'élément conducteur pour former la deuxième région d'accouplement ; et
la deuxième languette d'électrode comportant une première partie s'étendant vers la première languette d'électrode, une deuxième partie chevauchant une région de la partie de connexion de la première languette d'électrode pour former la première région d'accouplement, et une troisième partie agencée entre la première partie de la deuxième languette d'électrode et la deuxième cellule de batterie, la troisième partie s'étendant dans la première direction.

2. Bloc-batterie selon la revendication 1, dans lequel l'élément conducteur (150) est connecté électriquement à la deuxième languette d'électrode (12a) par l'intermédiaire de la première languette d'électrode (11a).

3. Bloc-batterie selon l'une quelconque des revendications 1 à 2, dans lequel la première languette d'électrode (11a) et la deuxième languette d'électrode (12a) sont soudées au niveau de la première région d'accouplement (P11), et/ou l'élément conducteur (150) et la deuxième languette d'électrode (11a) sont soudés au niveau de la deuxième région d'accouplement (P12).

4. Bloc-batterie selon l'une quelconque des revendications 1 à 3, comprenant en outre un élément de support (15) agencé entre la première partie de la deuxième languette d'électrode (12a) et la deuxième cellule de batterie, dans lequel l'élément de support occupe optionnellement un espace entre la première cellule de batterie et la deuxième cellule de batterie.

5. Bloc-batterie selon la revendication 4, dans lequel l'élément de support (15) occupe un espace entre la troisième partie de la deuxième languette d'électrode (12a) et la partie de connexion de la première languette d'électrode (11a).

6. Bloc-batterie selon l'une quelconque des revendications 1 à 5, dans lequel la deuxième languette d'électrode (12a) comprend une partie d'encoche agencée au niveau d'une région fléchie entre la première partie de la deuxième languette d'électrode et la deuxième partie de la deuxième languette d'électrode.

7. Bloc-batterie selon l'une quelconque des revendications 1 à 6, dans lequel l'élément conducteur (150) comprend une unité de câblage (155) et un film de base (151), dans lequel le film de base est agencé entre la première languette d'électrode (11a) et l'unité de câblage au niveau de la deuxième région d'accouplement (P12).

8. Bloc-batterie selon l'une quelconque des revendications 1 à 7, comprenant en outre :
une troisième cellule de batterie comprenant une troisième languette d'électrode (23 a) ;
dans lequel la troisième languette d'électrode est accouplée à l'une des première ou deuxième languettes d'électrode (21a) au niveau d'une troisième région d'accouplement (P23), la troisième région d'accouplement étant différente des première (P21) et deuxième (P22) régions d'accouplement.

9. Bloc-batterie selon la revendication 8, dans lequel la troisième cellule de batterie est empilée sur la deuxième cellule de batterie, la troisième languette d'électrode (23a) étant agencée de sorte à déborder dans la première direction.

10. Bloc-batterie selon la revendication 9, dans lequel la troisième languette d'électrode (23a) comporte une première partie s'étendant dans la première direction, et une deuxième partie chevauchant une région de la première partie de la deuxième languette d'électrode (22a) pour former la troisième région d'accouplement (P23).

11. Bloc-batterie selon l'une quelconque des revendications 8à 10, dans lequel la troisième languette d'électrode (23a) est soudée sur la deuxième languette d'électrode (22a) au niveau de la troisième région d'accouplement (P23).
